# EUROPEAN PATENT APPLICATION

(11) **EP 1 130 529 A1**
(43) Date of publication of application: **05.09.2001**
(21) Application number: 01300463.5
(22) Date of filing: 19.01.2001
(51) Int. Cl.: G06F 17/60

(54) **Method of determining and financing over a network of accounts receivables**

(30) Priority: 21.01.2000 US 177729 P; 26.01.2000 US 178137 P; 05.06.2000 US 587669
(71) Applicant: Acctiva Corp., Minneapolis, Minnesota 55416 (US)
(72) Inventor: Sharman, Lane, San Diego, CA 92130 (US)
(74) Representative: Loveless, Ian Mark

(57) **Abstract**

A technique of financing over a network of receivables. A seller takes some action and electronically sends an invoice over a network such as the internet. The invoice is sent to a Clearing Agent who passes the invoice on to the obligor. The obligor has the opportunity to accept, decline or challenge the invoice. If the invoice is not challenged in the specified time, then the seller is notified. If the invoice is accepted by the buyer, then the buyer's credit profile is evaluated, and the invoice becomes a marketable item. After completion, the invoice can be financed. A number of notes are aggregated and placed for financing over a network such as the internet.

## Description

### Background

The present application teaches a way of using a network, such as the Internet, for financing, e.g. for determining and financing an accounts receivable.

A seller of goods or siervices does work in return for payment from a customer. Typically there is a delay between the time a bill is sent, and when the payment for the work is received and the work is done. The customer becomes obligated to pay the bill.

The bill, once sent, becomes an accounts receivable for the seller. The accounts receivable represents collateral which can be used to secure a loan from a third party, often called a "factor". The factor takes some percentage of the receivable as a fee.

Like all businesses, the factor tries to make as much profit from the transaction as possible.

### Summary

One aspect of the present application teaches a way of carrying out "web-factoring" where the loaning of money, e.g., secured against account receivable, is done over a network, more preferably the Internet.

A system is disclosed where the entire transaction, including invoice, agreement to pay, credit evaluation, and loaning is done automatically.

### Brief Description of the Drawings

These and other aspects will now be described with reference to the accompanying drawings, wherein:
Figure 1 shows a view of a computer network;
Figure 2 shows a flowchart of operation of the system;
Figure 3 shows the cash management model;
Figure 4 shows an exemplary invoice description form;
Figure 5 shows an exemplary buyers approval form;
Figure 6 shows a service notification form; and
Figure 7 shows a bidding system.

### Detailed Description

Many of the systems used herein can be accessed by computer. Using the preferences of the lending institutions, this system can form the notes into a group that is more likely to be financed. The grouping can create a reduction of risk, since any single default in the group does not imply a default of the entire group.

Another aspect takes the lot and places it for auction among a number of different financing entities. The individual or package finances are therefore made available to a number of different institutions, who can each bid on the lot. This tends to ensure that the underlying creditor will obtain the best possible price. The lot is serialized as a security and the winning bidder becomes the Security Holder.

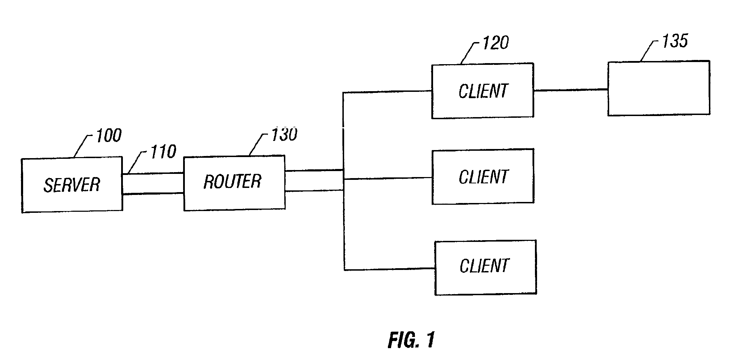

The basic hardware, forming the basic setup of the present system, is shown in Figure 1. A server computer 100 at a central location stores a database of information as well as a user interface program, and a main program which can run a network interfacing program such as a web-browser. The server computer 100 is connected to a network 110 which connects the server to a plurality of client computers. The network can be the Internet, or can be any other network that allows an exchange of information. For example, in one embodiment, the network 110 may be a dedicated dial up or LAN network. The network comprises at least an information line shown as 110, and at least one router 130. The information line 110 can be a telephone line, and the router 130 can be the Internet backbone for example.

The server computer 100 runs a routine that is described herein. The system shows only a few of the client computers 120, however, it should be understood the number of client computers is limited only by the bandwidth capability of the router 130.

The client computer 120 can be any computer which is capable of running a network interfacing program such as a web-browser. In addition, the client computer can have various peripherals attached thereto. These peripherals can include, for example, security equipment, e.g., a biometric scanner, 135 and other known peripherals.

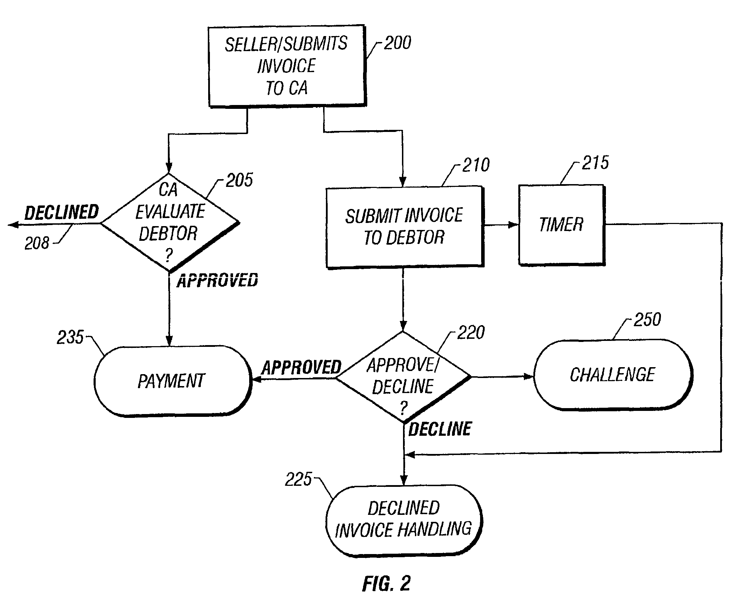

In operation, each of the client computers 120 is driven to run the specified routine under control of the server 100. According to the present application, each of the parties may enter an initial profile either over the network or in person. The profile may be supplemented over time. The profile can require or accept supplementation by registered third parties. In this latter case, a current profile of the party may include other information that a lender might find useful, such as credit opinions, ranking and history. Parties providing such independent information can use conventional access verification techniques, such as a digital signature to provide some degree of authentication. A summary of the specified routines that are run by the computers is shown in Figure 2. It should be understood that multiple client computers can simultaneously operate and can simultaneously run their part(s) of the routine. When this happens, the client part of the routine may have multiple clients requesting information from the same server. Any multi-tasking system, such as a multi-tasking and/or multithreaded system can be used.

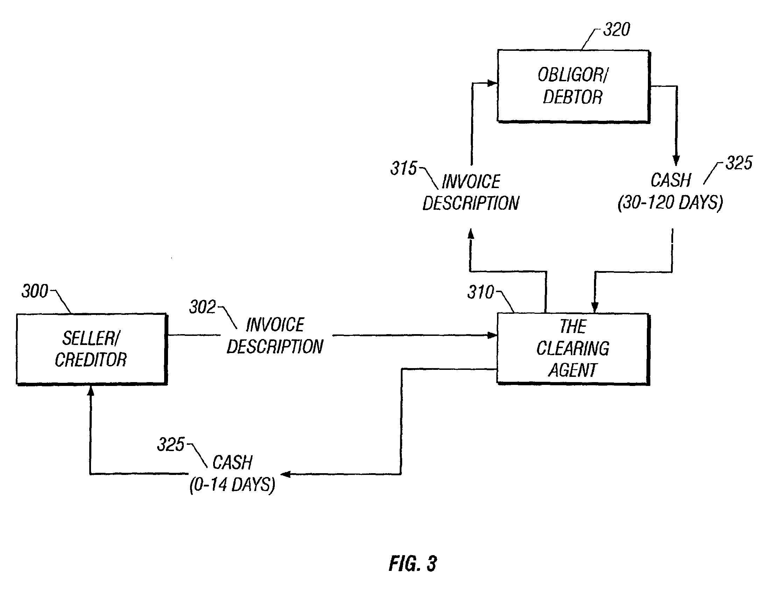

The basic operation is shown in Figures 2 and 3. There can also be multiple servers. At 200, the seller/creditor submits an invoice to the Clearing Agent. The provider of the services described herein is called the Clearing Agent. This provider offers the network services to the Buyer and Seller; manages the auction; and, manages the funding, collection, and distribution at maturity of the lot. The seller/creditor, who can be any seller of goods or any person who performs any kind of service or operation and will get paid for it, is shown as 300. The seller carries out some action, and in response to that action produces an invoice at 302. The reference to the invoice is sent to the Clearing Agent 310. This process is generally shown as 200 in Figure 2.

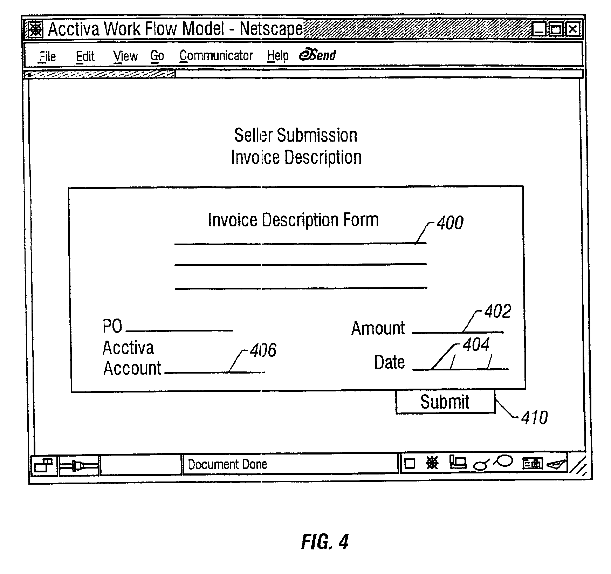

This system electronically sends the invoice reference to the Clearing Agent instead of to the obligor/debtor. The invoice submission operation can take a specified form. Figure 4 shows a sample seller submission invoice description form. The invoice description form includes a number of fields. The field 400 is the field for describing the work which is carried out, as would be present in any paper invoice. For a law firm, for example, this work that is carried out might be legal services. The amount of the invoice and payable currency is entered in field 402, the date in field 404, and the Activa account number in field 406. Other information such as payment terms (maturity date, interest rate, penalty, etc.) of course requires that the seller 302 already had an account with the Clearing Agent 310 referred to as your Activa account number 406. Other information such as the purchase order number can also be added on this form. In fact, the form can be customized by the seller for the clearing agent as desired. When complete, the user presses the submit button 410, which submits the information to the Clearing Agent 310.

This system can use any conventional kind of security for sending this information, e.g., encryption, digital verification or some other security techniques. This verifies the authenticity of each party, and minimizes the likelihood of fraud. While digital certificates are disclosed, these are exemplary of other secure identification techniques that can be used including conventional bank challenge techniques, biometrics and the like.

The Clearing Agent evaluates the note at 205 to determine how the Clearing Agent will handle the note. This evaluation can include one or many stages. In order to evaluate the note, the Clearing Agent must find out something about the debtor/obligor.

Any kind of available information can be used for the debtor evaluation. A third party referral directory can be used, as well as an internal directory. The third party referral directory can include, for example, Dunn & Bradstreet ratings or other types of credit ratings. The rating can use an internal directory that specifies previous credit and transaction history with the same agent. The Clearing Agent can also require that the seller provide the Clearing Agent with information about the buyer, either in addition to or in place of the publicly available credit information. Additional databases can also be used, such as the Fraudulent Directory of Buyer Identities, Lexis/Nexis, and others.

After evaluation at Step 205, the buyer is scored. The score can be numerical or graded, but in any case represents the likelihood of repayment, and creditworthiness of the buyer. This may also take into account different information such as history of no-pay, or slow-pay, and previous information about payment.

If insufficient information about the buyer is found, then the identity of the buyer can be set as "provisional." If so, different operations can be carried out to confirm the identity of the buyer. This can use the telephone, web URL, bank reference, and other means as necessary to verify the buyer's identity, and assets/credit.

The buyer can also be declined, however, shown as 208. If the buyer is declined at 208, no further action is taken by the Clearing Agent, and the seller is notified. The seller may also be given a negative scoring, by virtue of having submitted an unacceptable buyer.

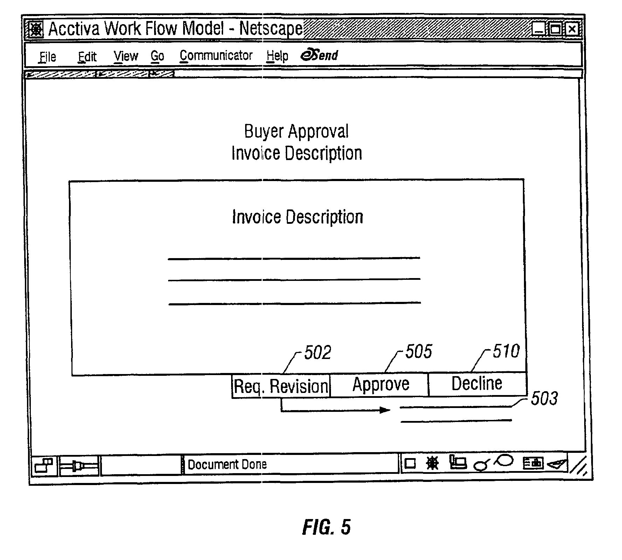

Either before, during or after this evaluation process, the Clearing Agent passes on an invoice description 315 to the obligor 320 at 210. This invoice description can also be done electronically. The invoice description submitted to the buyer is shown in Figure 5. This invoice description includes all of the usual information about an invoice sent to the buyer, and gives the buyer the opportunity to approve 505, or decline the invoice. This is shown as Step 210 in Figure 2. The invoice description in Figure 5 can be sent, for example, by e-mail.

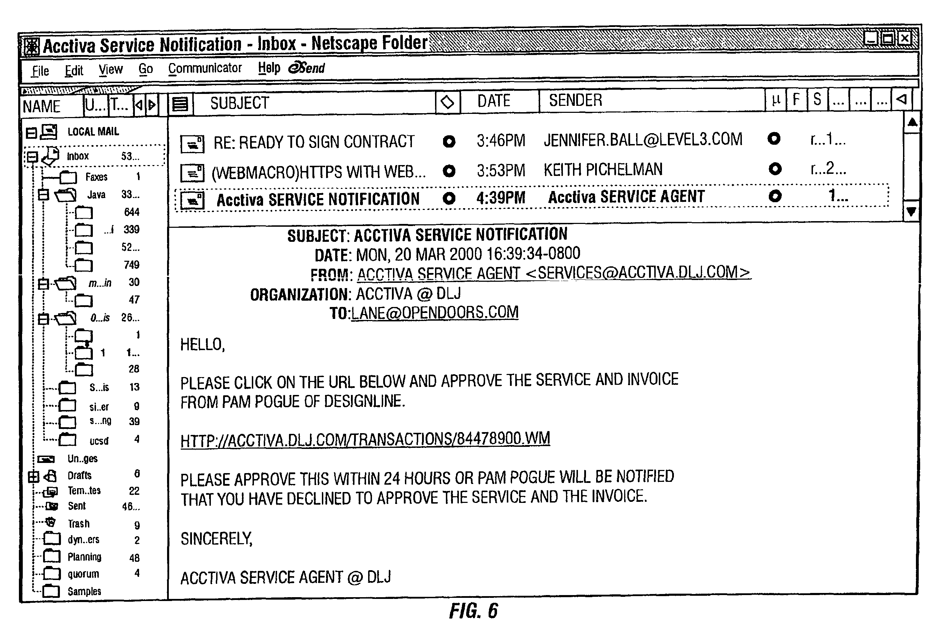

Figure 6 shows a sample e-mail that an obligor might receive. The e-mail is from Activa Service Notification, and when actuated, brings up the description of Figure 5. At the same time, a timer is started at 215. The timer provides the buyer with a time limit within which they must accept the invoice or challenge it.

Once the buyer receives the invoice, they have the ability to approve, decline or request revision, using the buttons 502, 505, 510. The request revision allows a user to enter a proposed new invoice description 503, which is sent back to the clearing agent. This is shown at 220 in Figure 2. If the buyer declines, or if the timer 215 expires without the buyer saying anything, then the declined invoice handling program is called at Step 225. This can simply be a manual operation. If approved at Step 220, however, which is expected to be the normal case for most of these invoices, then the operation returns to the Clearing Agent for payment. At this point, the buyer becomes a "debtor", and the seller becomes a "creditor".

If approved, and the Clearing Agent has approved the debtor, then control passes to 235 which handles the payment routine. Eventually, when payment is complete, cash is returned to the seller/creditor at 325. This cash may be returned after for example, 0 to 14 days. The Clearing Agent may aggregate and auction these accounts receivables over the internet, and pass the received moneys to the creditor. The Clearing Agent then becomes the new creditor, who is responsible for collecting the cash from the debtor 320. The Clearing Agent collects the cash sometime later at 325.

An alternative keeps the normal flow of funds being preserved between the debtor and the creditor. The preservation of the flow of funds after service delivery is important in some Buyer/Seller relationships and this aspect of the invention keeps this attribute intact. The financing mechanism allows for payment to be made directly from the Obligor to the Seller, as opposed to the Obligor making a payment to the Clearing Agent. When the Obligor pays, the Clearing Agent collects from the Seller, not the Obligor. Collection under this mechanism is contractual. However, the invoice description can also include a special link to activate, to indicate that the payment has been made, so that the Clearing Agent may debit the Seller's account, or expect the funds from the seller.

In each of these cases, the Clearing Agent funds to the Seller the invoice amount less a discount on the funding date. On the redemption date, the Seller funds to the Clearing Agent the redemption amount of the contract, usually the face value of the invoices plus a transaction fee.

This mechanism regulates the flow of funds according to the contract established between the Seller and the Clearing Agent. The mechanism does not disturb the Obligor's process of making a payment directly to the Seller other than a verification of the existence of the underlying promissory.

This procedure shown in Figure 2 may complete the operation between the Clearing Agent and the seller/creditor.

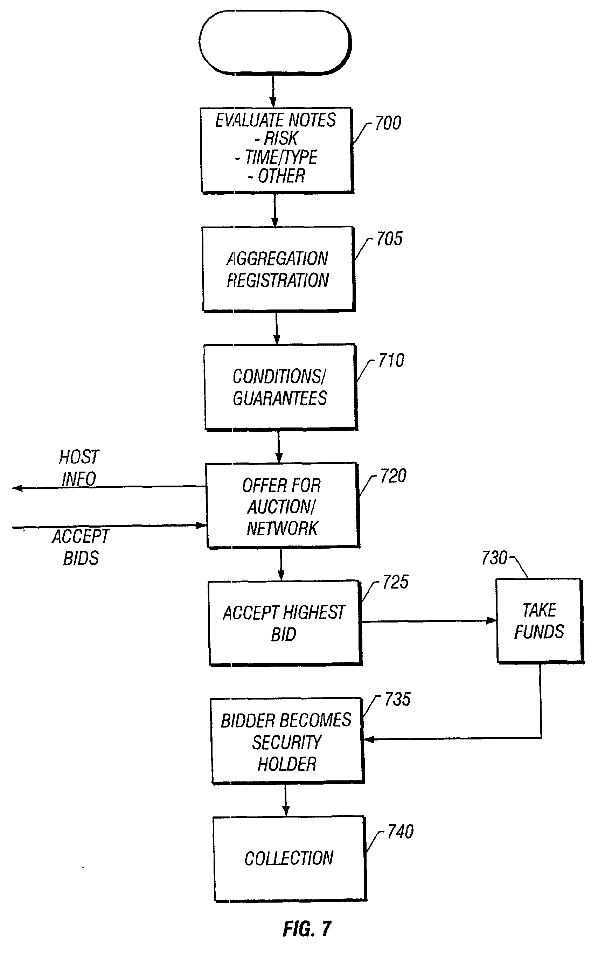

Figure 7 shows the operation to securitize notes. The notes are securitized and aggregated. At 700, the Clearing Agent evaluates notes. This evaluation can be for risk evaluation, time and type of payment evaluation, and other factors which are not specifically enumerated herein. For example, the due dates, the type of companies, the business, and the like can be evaluated in this step. Categories can also include risk, geography, industry and others. The notes are aggregated into a lot which can include similar promissory notes, or notes that specify defined characteristics. Those notes are then offered to financing entities via an auction.

Different criteria can be used to aggregate similar notes, or to aggregate a collection of diversified notes.

As part of the aggregation, the aggregate can also be "securitized." The securitization could include creation of a zero coupon bond with a maturity date and a face value. This is generally shown as the registration operation at 705. Registration also may involve electronically registering the security with an appropriate registration authority, e.g., the SEC.

Another alternative is that the seller may divide the invoices into derivatives of specified values, e.g., $100 or $1000. The derivatives can then be auctioned as short term paper, e.g., for 90 days or 120 day returns. The auction values will depend on market conditions. In this way, however, each buyer takes a much smaller part of the loan.

Another important feature is the Clearing Agent may elect to place conditions and guarantees on the security. For example, a security may have a value of $100,000 due in 90 days. The Clearing Agent can add their own securitization to the security, guaranteeing face value redemption in 90 days. This would make the operation equivalent to a commercial loan to the Clearing Agent for a zero coupon bond that matures in 90 days. The Clearing Agent therefore assumes the principal credit risk of the security. In this case, the Clearing Agent may require a higher commission out of the amount being given to the creditor. However, this may make it more desirable to buy these notes. Providing conditions and guarantees as in 710 is not mandatory, in fact the Clearing Agent may be totally an agent between the buyer/seller and security holder.

The offer for auction at 720 can be over the network, such as the internet, and can accept and request bids for a specified period of time. The bid at 720 may have a minimum bid which is calculated by the Clearing Agent based on the coefficients of risk and confidence, and some discount indicating the minimum that the Clearing Agent will accept.

For example, the bid may be open for 24 hours. The auction may be available only to registered parties, and preferably only to parties who already have a funding account with the Clearing Agent. Each security is posted on the internet with information. This enables any person who is intending to consider these securities to carefully review all of this information. For example, every element, including the buyer, seller, profiles of both the buyer and seller, risks, and confidence coefficient, be provided on the internet. The terms and conditions of the promissory can be fully described. The categorization of the aggregation can also be described. The bidding user interface can allow users to search for example by specified characteristics. In turn, this can enable users to find the kind of security they want.

When bidding is over, the highest authorized bid is accepted at 725. The funds are taken from the bidder's account at 730. After transferring the funds, the bidder becomes the new security holder. This is shown at 735.

The collection phase is then entered at Step 740.

The buyer may pay to the collection agent or the creditor directly the amount due on or before the maturity date. If paying late, the buyer may be subject to certain penalties. Unless a guaranty has been provided, the security holder takes these risks.

According to one embodiment, the security holder may maintain a running account with the collection agent, with a fundand the amount simply be placed in escrow. The funds are eventually collected from the buyer at 325. These may also be placed into escrow. When these funds are collected, the escrowed funds from the security holder are released and retransferred to the security holder. Any amounts held in reserve for the benefit of the seller are then released to the seller at this time as well.

The above has discussed certain parts of the operation which enable the system to provide funding to a user in a relatively quick manner. Especially after a track record is established, users can feel relatively confident that they will be able to obtain cash from a transaction relatively quickly.

Although only a few embodiments have been disclosed in detail above, other modifications are possible.

## Claims

1. A method comprising:
obtaining information about specified financing parts, over a network, from a plurality of different server computers which are also connected to said network;
forming an aggregation of a plurality of said financing elements into a package according to a specified criteria; and
providing financing for said package.

2. A method as in claim 1 wherein said financing parts include financing of an accounts receivable.

3. A method as in claim 1 wherein said providing financing comprises forming an auction for said package.

4. A method as in claim 1 wherein said network is the Internet.

5. A method as in claim 2 wherein said specified information includes credit information.

6. A method as in claim 3 wherein said forming an auction comprises providing descriptions of said packages, each item in the package including information about the item including credit information, rating information, and payment detail information.

7. A method as in claim 1 wherein said obtaining information about specified financing parts comprises sending, from a creditor, an electronic invoice to a Clearing Agent, receiving the invoice at the Clearing Agent, providing said invoice from the Clearing Agent, to a debtor responsible for paying said invoice, and receiving a response from the debtor indicating whether the invoice is acceptable.

8. A method as in claim 7 further comprising financing against the invoice and providing said financing to the creditor.

9. A method as in claim 8 further comprising forming an auction for said package, obtaining financing for said package, and providing money to said creditor based on said package.

10. A method, comprising:
electronically submitting an invoice for services rendered by a creditor, said invoice including at least a description of services, an amount of services, and payment information;
allowing a debtor on the invoice to electronically receive said invoice and giving the debtor options to accept said invoice or reject said invoice;
evaluating a credit profile associated with said invoice; and
if said invoice is accepted and said credit profile meets a specified criteria, then providing a payment to said creditor before the invoice is paid.

11. A Method as in claim 10 wherein said credit profile includes at least a profile indicating previous payment history of the debtor.

12. A method as in claim 11 wherein said credit profile includes at least a previous credit profile of the creditor.

13. A method as in claim 10 further comprising obtaining a plurality of said invoices, grouping said invoices, and obtaining financing for the grouping of invoices.

14. A method as in claim 13 wherein said obtaining financing is via an auction over a public network.

15. A method as in claim 1.4 wherein the public network is the internet.

16. A method as in claim 13 wherein the invoices are grouped by specified oriteria.

17. A method as in claim 16 wherein specified criteria is an amount of risk.

18. A method as in claim 10 wherein, after financing, the obligor becomes obligated to pay a third party Clearing Agent.

19. A method as in claim 10 wherein, after financing, the obligor remains obligated to pay the creditor.

20. A method as in claim 10 wherein said creditor is sent said invoice by an e-mail.

21. A method as in claim 10, further comprising allowing said creditor to request revision of said invoice.

22. A method of financing invoices, comprising:
electronically submitting an invoice for payment through a Clearing Agent;
electronically receiving, through said Clearing Agent, an indication of whether said invoice will be paid;
determining a credit history associated with said invoice, at said Clearing Agent; and
assessing a risk of the invoice not being paid, at the Clearing Agent, and, if said invoice meets predetermined criteria, providing an auction type financing transaction, over the internet, for said invoice.

23. A method in claim 22 wherein said auction type financing transaction includes aggregating a plurality of invoices and conducting an auction for said plurality of invoices.

24. A method as in claim 23 wherein said invoices are assessed for a specified criteria and aggregated to diversify the risk.

25. A method as in claim 24 wherein said invoices are evaluated according to a specified criteria and aggregated according to like criterions.

26. A method as in claim 23 further comprising, when sending the invoice, establishing a time for acceptance, and, determining an expiration of said time for acceptance.

27. A method as in claim 23, further comprising dividing said invoices into divided amounts, and financing said divided amounts.
